Europäisches Patentamt

European Patent Office

Office européen des brevets

(19)

(11) Publication number: **0 071 176**
**A2**

(12) # EUROPEAN PATENT APPLICATION

(21) Application number: **82106578.6**

(22) Date of filing: **21.07.82**

(51) Int. Cl.³: **A 01 G 25/16**

(30) Priority: **27.07.81 IL 63434**

(43) Date of publication of application:
**09.02.83 Bulletin 83/6**

(84) Designated Contracting States:
**AT BE CH DE FR GB IT LI NL SE**

(71) Applicant: **NAAN MECHANICAL WORKS**

**Kibbutz Naan(IL)**

(71) Applicant: **Mekler, Dan**
**P.O. Box 1040**
**Jerusalem(IL)**

(72) Inventor: **Gorney, Moshe**

**Kibbutz Naan(IL)**

(72) Inventor: **Mekler, Dan**
**P.O. Box 1040**
**Jerusalem(IL)**

(74) Representative: **Kraus, Walter, Dr. et al,**
**Patentanwälte Dres. Kraus & Weisert Irmgardstrasse 15**
**D-8000 München 71(DE)**

(54) **Apparatus and method for irrigation.**

(57) Irrigation apparatus comprising apparatus for providing an intermittent supply of water, a water supply line receiving the intermittent supply of water, and a plurality of emitting units connected in parallel with the water supply line along the extent thereof, each of the emitting units including a water reservoir and valve apparatus operative to govern the water output from the reservoir.

EP 0 071 176 A2

Croydon Printing Company Ltd.

APPARATUS AND METHOD FOR IRRIGATION

—I—

FIELD OF THE INVENTION

The present invention relates to irrigation generally.

BACKGROUND OF THE INVENTION

A great variety of apparatus and techniques for trickle irrigation are known and presently in use. Most trickle irrigation systems in use today employ a water supply line typically of inner diameter between 12 and 25 mm and a maximum length of about 200 meters.

Associated with the water supply line at predetermined intervals therealong are irrigation emitters which are operative to provide a water output at a predetermined rate as a function of the water pressure thereat. A basic difficulty and limitation associated with irrigation techniques is the variation of the line pressure due to a number of factors. Primary is the reduction of line pressure as a function of the length of the water supply line due to effects of friction on the water flow therethrough. Also significant is the effect of topography along the water supply line. Relatively high locations are at a lower pressure than relatively low locations.

The result of the variations in pressure is non-uniformity in water output. While such non-uniformity may be tolerated within predetermined tolerances, it does result in wastage due to over or under watering. Even more significantly, it greatly reduces the maximum length over which a single irrigation line may extend.

Pressure controlled irrigation emitters are employed in an effort to provide a uniform output notwithstanding variations in line pressure. The use of pressure controlled irrigation emitters does not, however, enable irrigation lines of any desired length to be used, nor does it enable trickle irrigation to be used under some extreme topographical conditions, as in mountainous terrain.

Another significant difficulty encountered in conventional irrigation systems is clogging of narrow openings in the irrigation emitters. This overall problem arises because relatively narrow passageways are employed in order to induce energy losses in the water flowing therethrough, thereby to reduce the rate of flow and pressure of the water flow. Various designs of irrigation emitters have been proposed which are said to increase the kinetic energy losses of the flowing water with relatively wide passageways. In almost all cases, however, filters are required for removing particles in the water supply before the water is supplied to the irrigation emitters.

There is described in Israel Patent 53534, published March 31, 1981, an automatically controlled irrigation system comprising a pipeline connectable with a water supply source, a plurality of liquid distributing nozzles spaced in series along the pipeline, storage means, with reservoirs constituted by expansion chambers for storing the liquid to be distributed and communicating with the pipeline, each such storage means being located adjacent a corresponding nozzle, a pressure actuated valve for opening and closing the connection between the nozzle and storage means, such that in a first working stage when the pressure upstream of the nozzle is higher than in the storage means the connection between the storage means and the nozzle is interrupted and in a second working stage, when the pressure downstream of the nozzle is higher than in the storage means, the nozzle is connected with the storage means, wherein the storage means are situated downstream from a corresponding nozzle and actuating valves provided in the pipeline are designed and positioned in such a manner that in the first working stage the connection between the nozzle and the pipeline is closed and the liquid flows from the source to the storage means, and in the second working stage the connection between the nozzle and the downstream pipe portion is closed while the nozzle is connected with the upstream pipe portion.

The system of Israel Patent 53534 suffers from a number of disadvantages due to the fact that it employs emitters arranged in a series arrangement. Principal among these disadvantages is that all of the water flowing through the system passes through each valve in the series. This limits the amount of water flow for a given size valve. Furthermore the series arrangement requires a relatively long time for filling and emptying of all of the emitters, further limiting the effective output of the system for components of a given size. A further disadvantage is that where a reservoir is used, a separate component from the valve is provided.

## SUMMARY OF THE INVENTION

The present invention seeks to provide irrigation apparatus which overcomes the problems of pressure variations and clogging which characterize presently available irrigation apparatus and which enables significantly longer irrigation lines to be employed with more uniform supply results than was previously possible and at significantly lower cost.

There is thus provided in accordance with an embodiment of the present invention irrigation apparatus comprising apparatus for intermittent supply of water; a water supply line receiving the intermittent supply of water, a plurality of emitting units associated in parallel with the water supply line along the extent thereof, each of the emitting units including a water reservoir and valve apparatus operative when the water pressure in the water supply line exceeds a first threshold to prevent outflow from the reservoir, and operative when the water pressure in the water supply line exceeds a second threshold to permit flow from the water supply line to the reservoir, whereby when the water supply line is pressurized, each of the emitting units receives a supply of water determined by the size of the reservoir and upon release of pressure at the supply line, water from the reservoir is permitted to flow outside thereof.

Further in accordance with an embodiment of the invention, the water supply line may be maintained at any desired pressure greater than 1 Atm. during the supply of water thereto. Additionally in accordance with an embodiment of the present invention the water supply line may have an inner diameter as small as 6 mm. It is a particular feature of the present invention that water supply lines extending up to 400 meters or more from a water supply source may be provided in accordance with the present invention to have a substantially uniform output rate along their entire length.

It is a particular feature of the present invention that the emitting units may be constructed to direct water to a location below the ground surface, thus significantly reducing losses due to evaporation.

Additionally in accordance with an embodiment of the present invention, the apparatus for intermittent supply of water is coupled to liquid drainage apparatus for draining liquid from the water supply line. According to one embodiment of the invention, the draining apparatus comprises a drain to the atmosphere. According to an embodiment of the invention, the draining apparatus comprises reservoir apparatus for storing the drained water and returning the stored water to the water supply line.

Further in accordance with an embodiment of the invention the emitting units comprise a water inlet, a seal arranged to lie normally in sealing engagement with the water inlet; a reservoir and a water outlet from the reservoir, the seal being operative in response to pressure exceeding a first pressure threshold to block the water outlet and being operative in response to pressure exceeding a second pressure threshold, which is at least as great at the first pressure threshold to premit water flow from the water inlet into the reservoir.

Additionally in accordance with an embodiment of the invention the emitting units also comprise spring biasing means for urging the seal into normally sealing engagement with the water inlet.

According to an alternative embodiment of the invention, no spring means are provided and the seal comprises a cup shaped resilient member which is tensioned by the protruding end of the water inlet.

According to an embodiment of the invention, the water inlet and outlet are formed in a single unit which is associated with interchangeable caps of selectable size for defining the reservoir.

Additionally in accordance with an embodiment of the present invention there is provided an irrigation emitter suitable for parallel engagement with a water supply line and comprising a water reservoir arranged to receive an intermittent supply of water from a water supply line; and valve means operative to govern the water output from the reservoir in response to the pressure of the water source for providing an intermittent outflow from the water reservoir, the valve means comprising a water inlet; first and second valve seats, the first valve seat communicating with a water outlet from the reservoir and the second valve seat communicating with a water inlet to the reservoir from the water supply line; and a sealing member arranged for selectable engagement with said first and second valve seats.

Further in accordance with an embodiment of the present invention there is provided an irrigation emitter comprising a water reservoir arranged to receive an intermittent supply of water from a water supply line; valve means operative to govern the water output from the reservoir in response to the pressure of the water source for providing an intermittent outflow from the water reservoir and limiting means for limiting the maximum amount of water received by the reservoir so as to obviate the water pressure dependency resulting from trapped air in the reservoir.

In accordance with one embodiment of the invention, the limiting means may comprise a water quantity responsive valve fixedly or selectably disposed within the reservoir. Alternatively, the limiting means may comprise a diaphragm having a limited maximum displacement within the reservoir or a diaphragm displacement limiting element disposed within the reservoir. Any other suitable type of limiting device may alternatively be employed.

Additionally in accordance with an alternative embodiment of the present invention there is provided an irrigation emitter suitable for series engagement with a water supply line having an upstream portion connecting the emitter with a source of water supply and a downstream portion connecting the emitter to additional emitters whose water supply first passes through the subject emitter, the emitter comprising a water reservoir arranged to receive an intermittent supply of water from the water supply line, and valve means operative to govern the water output from the reservoir in response to the pressure of the water source for providing an intermittent outflow from the water reservoir, the valve means comprising first and second valve seats, a water inlet communicating with the upstream portion of the water supply line; a first conduit communicating with the reservoir and the water inlet at a first end and with the second valve seat at a second end; a water exit nozzle communicating with the first valve seat; a sealing member disposed in a sealing member chamber for selectable engagement with either of the first and second valve seats; and a downstream water outlet communicating with the downstream portion of the water supply line and with the sealing member chamber.

Further in accordance with the above described embodiment of the invention, the sealing member is operative, when the downstream pressure is less than the upstream pressure to engage the first valve seat preventing water outflow through the water exit nozzle and to permit water flowthrough from the water inlet to the downstream water outlet; and when the downstream pressure exceeds the upstream pressure to engage the second valve seat permitting water outflow through the water exit nozzle.

Additionally in accordance with an embodiment of the invention, the reservoir may be incorporated as part of a mounting spike associated with the emitter.

Further in accordance with an embodiment of the present invention, the water inlet defines a venturi lowering the pressure at the first conduit, enhancing the speed of unseating of the sealing member from the first valve seat, to enable emptying of the reservoirs of a plurality of emitters at the same time.

0071176

The present invention will more fully be understood and appreciated from the following detailed description taken in conjunction with the drawings in which:

Figs. 1A and 1B are respective general and detail sectional illustrations of an emitter unit constructed and operative in accordance with an embodiment of the present invention;

Fig. 2 is a partially schematic, partially sectional illustration of a drip irrigation system constructed and operative in accordance with an embodiment of the present invention;

Fig. 3 is a detailed sectional illustration of a control valve forming part of the system of Fig. 2;

Fig. 4 is a partially schematic, partially sectional illustration of a drip irrigation system constructed and operative in accordance with an embodiment of the present invention;

Figs. 5A and 5B are respective general and detail sectional illustrations of an emitter unit constructed and operative in accordance with an embodiment of the present invention;

Figs. 6A and 6B are respective general and detail sectional illustrations of an emitter unit constructed and operative in accordance with an embodiment of the present invention;

Figs. 7A and 7B are sectional views taken along respective perpendicular planes of a portion of the emitter unit of Figs. 6A and 6B, showing the coupling apparatus thereof;

Fig. 8 is a sectional illustration of an emitter unit constructed and operative in accordance with an embodiment of the present invention;

Figs. 9A and 9B are illustrations of two alternative embodiments of limiting apparatus useful with the emitters of the present invention;

Figs. 10A and 10B are detail sectional illustrations of emitter units constructed and operative in accordance with an alternative embodiment of the present invention employing two alternative types of limiting apparatus;

Fig. 11 is a sectional illustration of an alternative embodiment of reservoir structure for an emitter of the type illustrated in Fig. 8;

Fig. 12 is a part sectional diagrammatic illustration of an emitter system constructed and operative in accordance with an embodiment of the present invention;

Figs. 13A and 13B are respective sectional and partially cut away illustrations of a sprinkler useful in association with an emitter of the present invention; and

Fig. 14 is a sectional illustration of another type of sprinkler.

## DETAILED DESCRIPTION OF THE INVENTION

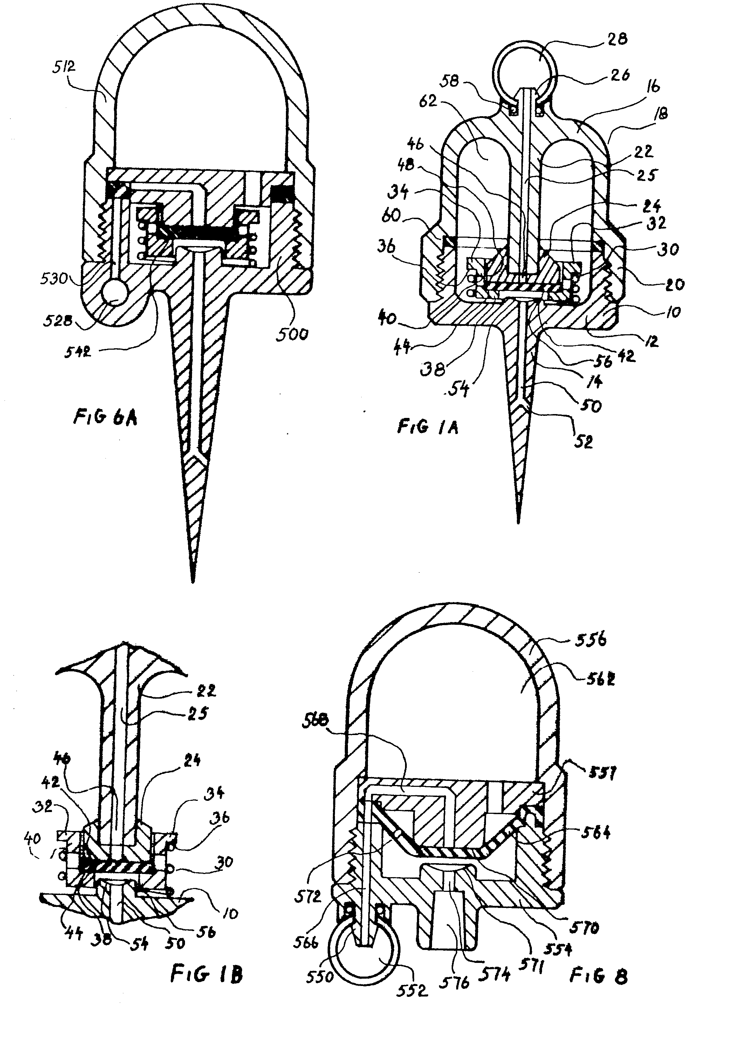

Reference is now made to Figs. 1A and 1B which illustrate an emitter unit constructed and operative in accordance with a preferred embodiment of the present invention and comprising a base 10, typically formed of plastic by conventional injection molding techniques and defining a top portion 12 and a lower spike portion 14. Threadably engaging base 10 is a cap portion 16. Cap portion 16 defines an outer wall 18, typically of circular cross section which is formed with inner threading along the extreme bottom rim thereof 20. Integrally formed with wall 18 and extending centrally thereof is a central stem 22 which terminates in a broadened stem end member 24.

Stem 22 is formed with a central bore 25, which communicates at the top thereof via a suitable connector 26 with the interior of a water supply conduit 28. For reasons which will be fully understood in view of the explanation which follows, it is a particular feature of the invention that a relatively small diameter water supply conduit 28 may be employed, even for very long emitter lines extending for more than 200 meters and even up to 1000 meters or more.

A spring 30 is seated on an interior bottom surface of base 10 and in turn supports and urges a seal support member 32 in an upward direction. Seal support member 32 comprises an integrally formed top annular portion 34, whose underside surface 36 rests on spring 30, a bottom annular portion 38 whose outer radius is less than that of of portion 34 and an intermediate portion 40, defining a cylinder, which joins portions 34 and 38. Both portions 38 and 40 are apertured to permit water flow therethrough. A rubber seal 42, typically in the form of a planar disk, is supported by seal support member 32 and rests on an upper surface 44 of bottom annular portion 34.

Seal 42 is normally urged by spring 30 to underlie a generally flat bottom surface of stem end member 24 in sealing engagement with an aperture 46 formed therein and communicating with central bore 25 of stem 22. Seal support member 32 is arranged in a loosely fitting slidable engagement with a peripheral side surface 48 of the end member 24.

Spike portion 14 is formed with a central bore 50 which terminates at its lower end in one  or  more exit apertures 52 which extend to the outside surface of the spike 14. Central bore 50 terminates at its upper end in a concave recess 54 defined at the top surface of a centrally disposed protrusion 56 located under seal 42 and centered with respect thereto.

Sealing rings 58 and 60, typically in the form of O-rings are provided at the junctions between the cap portion 16 and conduit 28 and base 10 respectively in order to prevent unwanted leakage of water thereat.

The operation of the emitter of Figs. 1A and 1B will now be described in detail. As noted, in the absence of pressure, seal 42 is disposed in sealing engagement with aperture 46. When the water supply conduit 28 is pressurized to a pressure, typically in the range of 10 Atm., pressure begins to build up within bore 25. At an intermediate pressure, typically 5 Atm, seal 42 becomes partially disengaged from the bottom surface of end member 24 and is forced by the pressure within bore 25 to engage concave recess 54 of spike 14 in sealing engagement, thus preventing escape of water from the volume 62 defined within the emitter. The peripheral edge of seal 42 remains sealed against end member 24.

Further pressurization of the water supply conduit and consequently of bore 25 eventually overcomes the force of spring 30 and forces the seal 42 out of sealing engagement with the bottom surface of end member 24, thereby permitting water flow from the water supply conduit 28 via bore 25 into volume 62. This flow continues as long as the water supply conduit 28 remains pressurized by the required amount to overcome the force of spring 30 and until the volume 62 is filled. The amount of water that enters the volume 62 is thus determined by the liquid capacity of volume 62. It may thus be appreciated that provided that the water supply conduit 28 is pressurized for a sufficiently long time for volume 62 to completely fill except for the pressurized air locked therein, the amount of water received by the emitter during each pressurization is precisely metered. It is further noted that this amount of water is independent of the pressure in the water supply conduit, except insofar as it affects the compression of the locked air. In any event, the pressure will be uniform over the entire emitter line, producing an identical output at every emitter, regardless of its position along the line.

It is noted that during the filling of the volume 62, removal of water from the volume 62 is prevented by the sealing engagement of seal 42 with concave recess 54. Once the pressurization of volume 62 becomes equal to that of water supply conduit 28, the spring force of spring 30 once again predominates and urges the outer peripheral surface of seal 42 into sealing engagement with the bottom surface of end member 24, thus sealingly isolating bore 25 from the volume 62 within the emitter. A reduction in the pressure in the water supply conduit 28 to a predetermined level, typically 5 Atm. causes seal 42 to break sealing engagement with concave recess 54, thereby permitting the outflow of water from volume 62 via bore 50 and exit apertures 52.

It is noted that at all times, the quantity of air which fills volume 62 at atmosphereic pressure is compressed and locked in the volume 62. This air, which is compressed to a relatively small percentage of its original volume is operative to assist in the initial outflow of water from volume 62 via bore 50 and exit apertures 52. The effect of gravity is also operative to assist the flow, particularly as the volume 62 is nearly emptied.

It is appreciated that for each cycle of pressurization and depressurization, the water outflow is precisely the same for all emitters in the line for a given water supply conduit pressure. It is also noted that the water outflow from the emitter is provided during the depressurized portion of the pressurization cycle. This it may be appreciated that pressure losses in flowing liquids due to friction are of no consequence, since pressurization continues until a steady state, no flow condition is reached at which the entire emitter line and every emitter is identically pressurized at steady state. Only after the pressure is subsequently removed does outflow take place.

It may be appreciated that the total outflow from a given emitter or from a given emitter line is determined by only two factors, the capacity of volume 62 of the emitter and the number of pressurization cycles applied thereto. The pressure of the emitter lineline does not influence the water outflow rate other than in determining the amount of compression which the air in volume 62 undergoes.

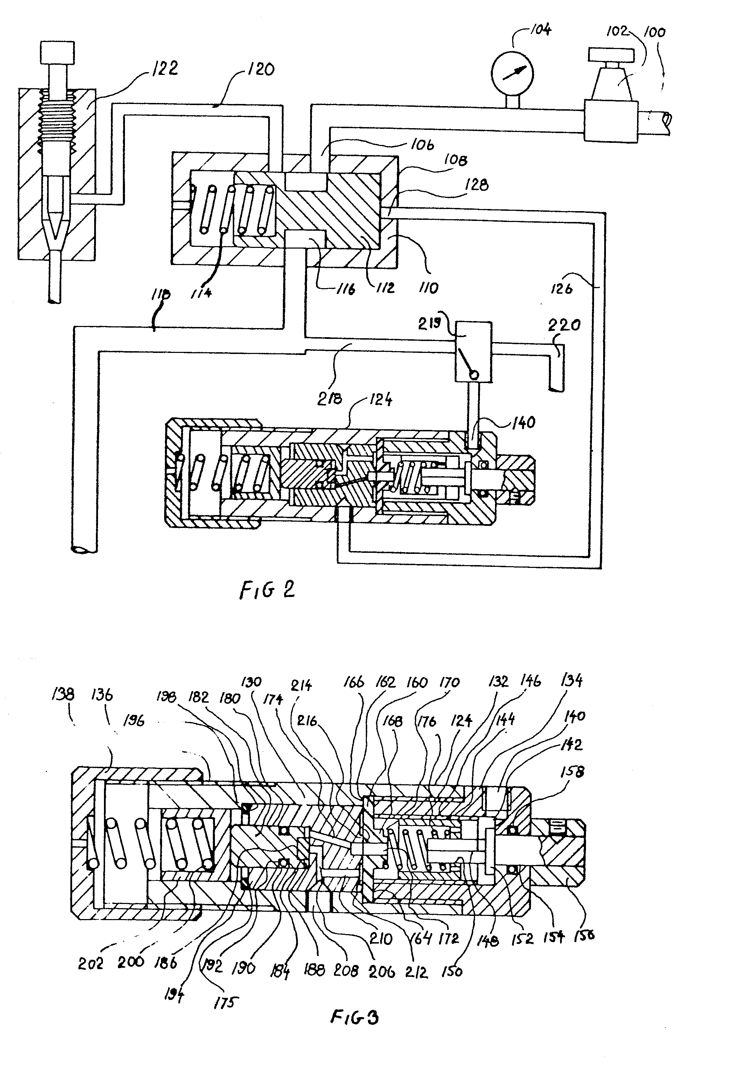

Reference is now made to Fig. 2 which illustrates apparatus for defining and controlling the pressurization and depressurization of an emitter line comprising emitters of the type described hereinabove in connection with Figs. 1A and 1B and hereinafter.

The system of Fig. 2 comprises a water supply line 100 which is connected to a source of water under pressure (not shown) such as water mains. Water supply line passes a pressure regulator 102 which is operative to govern the pressure in the line and a pressure indicator 104 which indicates the line pressure. Water supply line 100 terminates at an inlet 106 of a pressurization valve 108. Pressurization valve 108 may be a conventional two position, three conduit valve.

Pressurization valve 108 comprises a housing 110 and a piston 112 which is movable between first and second positions within the housing under the influence of a biasing spring 114 which urges it towards a first position as indicated in Fig. 2. When in the illustrated first position, the piston is positioned such that an annular recess 116 formed therein establishes water communication between water supply line 100 and an emitter line 118, along which are located a plurality of emitters, not shown. The emitters may be of the type shown in Fig. 1A or in other Figures herein. When the piston 112 is in its second position, full to the left of its illustrated position in Fig. 2, communication between the water supply line 100 and the emitter line 118 is terminated, and the emitter line 118 is connected instead to a ;pressure release conduit 120. Conduit 120 may communicate with a flow reducer 122 of conventional construction, having an outlet to the atmosphere. Alternatively conduit 120 may communicate directly with the atmosphere.

A control valve 124 is provided for governing the operation of the pressurization valve 108 through the provision of a control water input via a conduit 126 to an input 128 of pressurization valve 108. It is appreciated that the provision of a positive pressure control water input to valve 108 is operative to overcome the urging of spring 114 and move the piston from its first position to its second position so long as the control water input is provided at a sufficient pressure level.

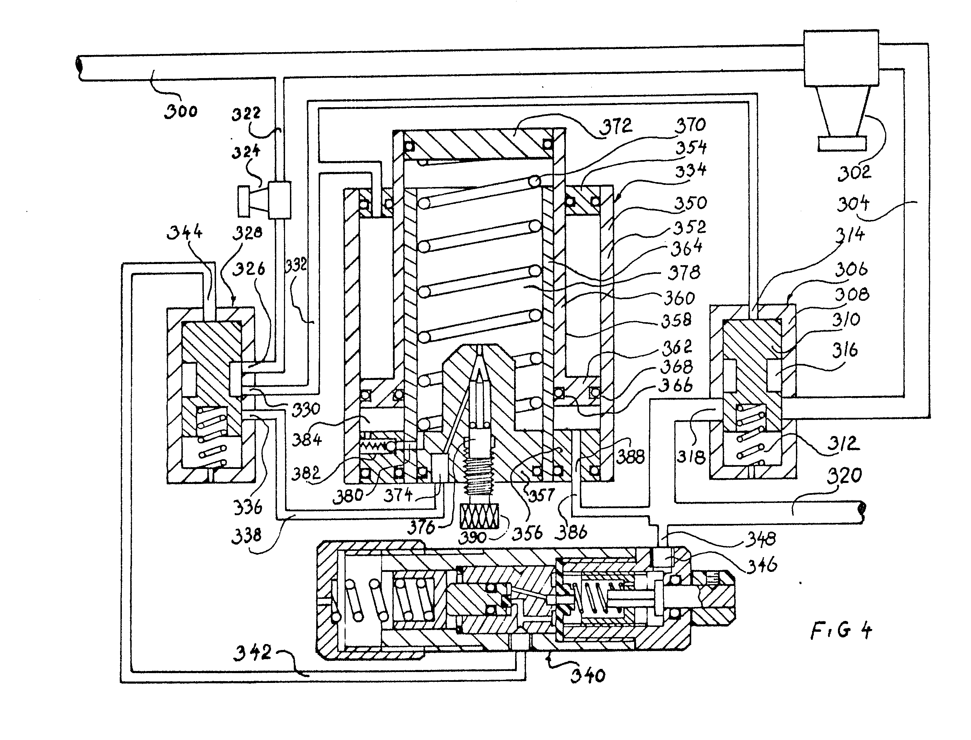

The construction and operation of the control valve 124 will now be described in detail with additional reference to Fig. 3 which is a detailed illustration of the control valve.

Control valve 124 comprises a body 130 defining at a first end thereof an inner threading 132 which accomodates a threaded valve element 134 and at a second end thereof an outer threading 136 which accomodates an adjustably positionable spring seat 138. Valve element 134 defines a water inlet port 140 which communicates with an interior bore 142. Disposed within interior bore 142 is a selectably positionable spring seat 144 which is formed with an outer threaded surface 146 which engages an interiorly threaded portion of interior bore 142 and is thus selectably positionable with respect to the length of the bore by rotation of the engaging threadings.

Selectable rotation of the spring seat 144 is provided by a shaft 148, typically of rectangular cross section, which engages a rectangular aperture formed in an end surface 150 of the spring seat. Shaft 148 is provided with a stopping surface 152 preventing disengagement thereof from the spring seat and extends through a relatively narrow extension 154 of bore 142 to the outside of valve element 134 and terminates in a knob 156. Sealing of the shaft 148 against leakage is provided by an O-ring 158.

The threaded engagement between the valve element 134 and the body 130 secures in place an apertured sealing disk 160 along the peripheral edge thereof between a shoulder 162 of body 130 and the end wall 164 of valve element 134. Sealing disk 160 comprises a base portion 166 and a built up central portion 168 which defines a spring seating surface 170. A central aperture 172 extends therethrough providing liquid communication from interior bore 142 to a channel 174 defined in an element 175. A spring 176 is located between spring seating surface 170 and the interior end surface 150 of spring seat 144. The amount of compression exerted on the spring is determined by suitable adjustment of knob 156, thus determining the axial position of spring seat 144.

Channel 174 communicates with a bore 180 formed in interior element 175. A piston 185 is sealingly located in bore 180 and is formed with a central recess 184 at the end thereof adjacent the interior of bore 180. A sealing member 186, typically formed of rubber is located in recess 184 and extends slightly beyond the end of the piston such that when the piston is fully seated in the bore 180 there is defined an annular region 188 between the end of the piston and the interior of the bore. Piston 182 is sealed with respect to bore 180 by means of a sealing ring 190 arranged in an annular recess 192 defined in piston 182. Interior element 175 is maintained in sealed engagement with body 130 by means of a sealing ring 194 disposed intermediate a shoulder 196 of body 130 and an end surface 198 of the interior element 175. Interior element 175 is forced against this sealing ring by the threaded engagement of the valve element 134 with the body 130.

Piston 182 is urged into bore 180 by means of a compression spring 200 which is supported at one end by spring seat 138 and at the other by a slidable spring seat 202 which abuts the outer end of piston 182. It is appreciated that the location of spring seat 138 which is determined by its selectable threaded engagement with the body 130 determines the amount of force on the piston 182.

Communicating with bore 180 at a central location of its interior wall is a conduit 206 which communicates with a control water port 208 and which also communicates via a conduit 210 with an annular volume 212 located exteriorly of sealing disk 160. It is appreciated that volume 212 normally does not communicate with central aperture 172 due to the sealed engagement between adjacent annular surfaces 214 and 216 of the disk and of the interior element 175 respectively which is provided by the action of spring 176.

The operation of control valve 124 will now be described in detail beginning from a situation wherein the pressurization valve has just moved to its first position and pressure is beginning to build up in the emitter line. Control valve 124 communicates with the emitter line 118 at a selected location therealong. If it is desired to sense the pressure at the end of the emitter line a valve 219 connects inlet port 140 with a conduit 220 communicating with the end of the emitter line. If it is desired to sense the pressure at the beginning of the emitter line, valve 219 is shifted to connect inlet port 140 with a conduit 218 which is coupled to the head of the emitter line. It is further noted that alternatively conduit 220 may be connected to any desired location along the emitter line. As pressure builds up at inlet port 140 water fills interior bore 142 and channel 174 as well as annular region 188. When the pressure reaches a sufficient level it overcomes the urging of spring 200 and forces the piston slightly out of the bore 180, thus terminating the normal sealing engagement between sealing member 186 and conduit 206 and permitting fluid communication between region 188 via conduit 206 with control water port 208 for providing a control water input via conduit 126 to the pressurization valve 108 for forcing the piston 112 from its first to its second position.

When piston 112 shifts to its second position, cutting off the emitter line from the water supply line 100, it couples the emitter line 108 with a pressure release conduit 120. The pressure in the emitter line then falls with the result that piston 182 becomes reseated and sealing member 186 seals conduit 206, thus cutting off fluid communication between the control water port 208 and the emitter line. As the pressure in the emitter line continues to drop the control water pressure at port 208 remains the same until the pressure differential is sufficient to enable the pressurized water communicating with port 208 and located at annular volume 212 to force sealing disk 160 inwardly such that the sealed engagement between adjacent annular surfaces 214 and 216 is broken. Fluid communication is thus established between port 208 and the emitter line via bore 142, thus enabling depressurization of the control water input at conduit 126. When the pressure in conduit 126 drops sufficiently, the spring 114 forces the piston 112 back to the first position and the entire cycle starts again.

It is appreciated that the pressure thresholds for maintenance of the piston 112 in respective first and second positions are determined by selectable orientation respectively of spring seat 138 and knob 156. Thus the pressure thresholds at which the emitters operate can be readily and changeably determined. Since the pressure which determines the onset and termination of emitter line pressurization is at the head of the pressurization line, it can be appreciated that before pressurization begins or terminates, the pressure throughout the emitter line must be uniform at the level at the head, since the head will be the last location to change in pressure.

It may be appreciated that in place of control valve 124 a conventional pilot valve such as a valve manufactured by Barmad of Kibbutz Evron, Israel, may be employed. It is further appreciated that in place of the control system illustrated in Fig. 2 a timer controlled or electronically controlled intermittent flow valve may be provided. Such timer and electronic controlled valves may or may not receive a pressure or flow indication input as desired.

Reference is now made to Fig. 4 which illustrates an irrigation system constructed and operative in accordance with a preferred embodiment of the present invention and in which backflow water is returned to the emitter line. A source of pressurized water (not shown) is coupled to a water supply line 300. A first pressure regulator 302 regulates the pressure on a main line 304 which is coupled to an input of a pressurization valve 306. Pressurization valve is a conventional two position valve, commerically available.

Pressurization valve 306 comprises a housing 308 and a piston 310 which is spring loaded by a biasing spring 312 which urges piston 310 into a first position, illustrated in Fig. 4, wherein no fluid communication is permitted by the valve 306. Valve 306 is operative to assume a second position in response to a control water input at an input port 314. In the second position, not illustrated in Fig. 4, an annular recess 316 is positioned in communication with the fluid input from the main line 304 and also with a fluid output port 318 communicating with an emitter line 320, so as to permit fluid communication therebetween and a flow of water to the emitter line.

A secondary water supply line 322 also communicates with water supply line 300 upstream of pressure regulator 302 and is provided with a second pressure regulator 324. Pressure regulator 324 maintains a higher water pressure than pressure regulator 302 to ensure proper operation of the apparatus that will be described hereinbelow.

Downstream of pressure regulator 324, secondary water supply line 322 is supplied to an inlet port 326 of a backflow regulating valve 328. Backflow regulating valve 328 is a conventional two position valve which is commercially available. Valve 328 also has a port 330 to which is coupled a piston operating conduit 332 which leads to a reservoir piston assembly 334 and a port 336 which leads via a conduit 338 to the reservoir portion of assembly 334. Conduit 332 is also coupled to a control water input of valve 306.

A control valve 340, which may be identical to the control valve described above in connection with Fig. 3, has a control water output connected via a conduit 342 to a control water input 344 of valve 328. Control valve 340 also has an emitter line port 346 coupled to the emitter line 320 via a conduit 348.

Reservoir piston assembly 334 comprises a housing 350, typically of cylindrical configuration and comprising a cylindrical wall portion 352, a top annular sealing ring 354 and a bottom sealing member 356. Disposed inside housing 350 is a piston 358 comprising a central cylindrical portion 360 which terminates an an outwardly facing annular flange 362. A central cylindrical member 364 which is fixed to bottom sealing member 356 defines an inner sealing wall for piston travel while the inner surface of cylindrical wall portion 352 defines an outer sealing wall for piston travel therealong. Sealing between the piston and respective inner and outer sealing walls is provided by respective sealing rings 366 and 368.

A compression spring 370 is located interiorly of cylindrical member 364 and seated against bottom sealing member 357 and a top surface member 372 of piston 358, for urging the piston into an extended orientation. A control water input from piston operating conduit 332 is operative to force the piston against the urging of the spring towards a retracted orientation.

Bottom sealing member 357 defines a backflow water input port 374 which communicates via a flow regulator 376 with the interior of a reservoir 378 defined by the interior volume of cylindcrical member 364 and the extension thereabove of the interior of piston central cylindrical portion 360. One way fluid communication is provided from reservoir 378 to a volume defined between the flange 362 of piston 358 and the bottom sealing member 356 via a conduit 380 and a one way valve 382, so as to permit water to leave reservoir 378 and enter a standby reservoir 384 defined in the volume between flange 362 and bottom sealing member 356 when a positive pressure gradient exists between the reservoir 378 and the standby reservoir 384. The standby reservoir communicates with the emitter line 320 via a conduit 386 and a port 388 defined in the bottom sealing member 356. A control screw 390 determines the level of operation of the flow regulator 376. According to an alternative embodiment of the invention, the flow regulator 376 may be omitted.

The operation of the apparatus of Fig. 4 will now be described in detail beginning with the situation illustrated in Fig. 4 where both valves 306 and 328 are in their respective first positions. Water from the water supply line is supplied via valve 328 as a driving input to piston 358 forcing water from reservoir 378 into the standby reservoir 384 and from standby reservoir 384 into the emitter line 320. At the same time water from the water supply line is also supplied via conduit 332 to the control water input of valve 306. As the pressure in conduit 332 rises, the control water input at valve 306 becomes strong enough to overcome the urging of spring 312 and to shift the piston 310 into its second position.

When piston 310 is in its second position, water is supplied under pressure from the main line 304 to the emitter line 320. It is appreciated that the piston assembly 334 is operative such that piston 358 is forced fully down in housing 350 before piston 310 assumes its second position. As the pressure in the emitter line 320 increases, water under pressure communicates to the standby reservoir 384. The water does not enter reservoir 378, however, due to the presence of one-way valve 382.

The pressurized water in emitter line 320 also communicates with control valve 340 via port 346 and conduit 348. As the pressure in the emitter line 320 rises to a predetermined level, communication is established between port 346 and control water conduit 342, providing a control water input to valve 328. In response to a control water input of a predetermined threshold pressure, valve 328 is operative to shift to its second position at which communication with the secondary water supply line 322 is terminated and communication between ports 330 and 336 is established. This communication is effective to provide a water flow from conduit 332 via valve 328 and conduit 338 to reservoir 378, thereby reducing the pressure at the control water input of valve 306, enabling spring 312 to shift piston 310 back to the first position, illustrated in Fig. 4. It is a particular feature of this apparatus, that the drained water from the control water input conduit is stored in the reservoir 378 and not discarded.

Once valve 306 has returned to its first position, the communication between the main water supply line and the emitter line is terminated. Pressurized water from the emitter line 320 enters the standby reservoir, forcing the piston 358 upward and thus forcing water from the volume above the piston via conduit 332 and conduit 338 into the reservoir 378. The emitter line thus loses pressure sufficiently to operate the emitters in the manner described hereinabove in connection with Fig. 1 and sufficient to create a pressure gradient within the control valve 340 such that fluid communication is established between conduit 342 and emitter line port 346. This reduces the pressure at the control water input to valve 328, thus shifting the valve back to its first position.

It is noted that it is a particular feature of the present invention that substantially no water is discarded in the depressurization of the emitter line, in contrast to the operation of the apparatus of Fig. 2.

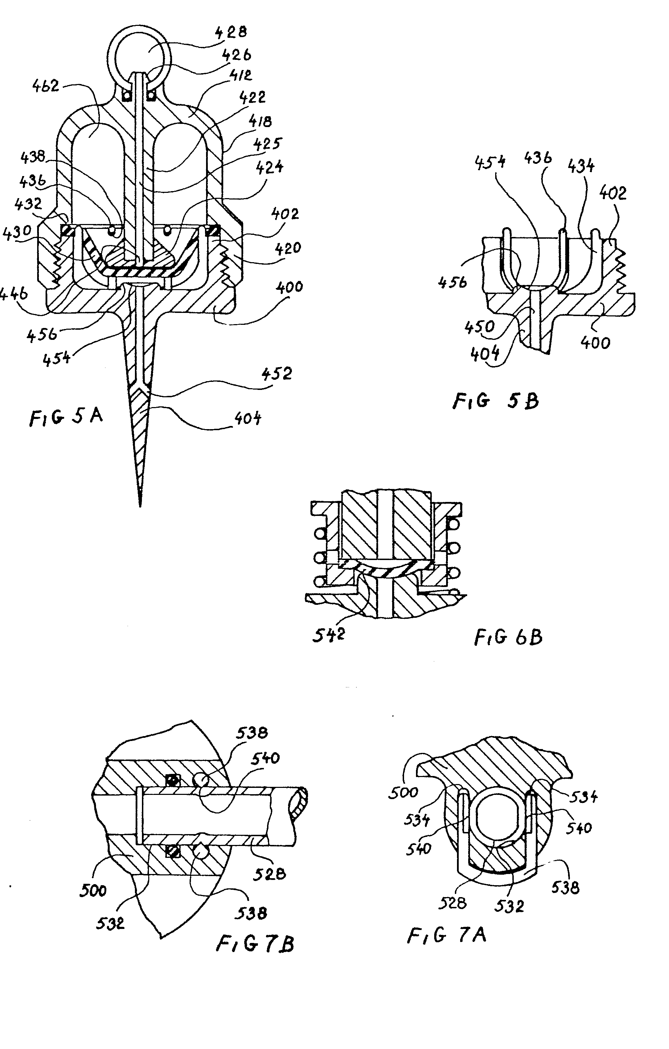

Reference is now made to Figs. 5A and 5B which illustrate an alternative embodiment of emitter unit comprising a base 400 defining a top edge 402 having an outside screw threading and a bottom spike 404 which is arranged for injection of water to a location below the ground surface. A cap portion 412, substantially identical to cap portion 16 described hereinabove in connection with Fig. 1, and comprising an outer wall 418 having an inner threading along the bottom rim 420 thereof, and a central stem 422 which terminates in a broadened stem end member 424. Stem 422 is formed with a central bore 425 which communicates at the top thereof via a suitable connector 426 with the interior of a water supply conduit 428.

A sealing member 430 is sealingly secured along its peripheral edge between the top edge 402 of base 400 and a shoulder 432 defined in the cap portion 412 adjacent its bottom rim 420. Sealing member 430 typically is formed of a resilient material, such as a rubber disk, maintained in a stretched distended orientation in tight sealing engagement with stem end member 424. Additional securing support of the sealing member 430 is provided by a multipronged retaining element 484 which is integrally formed with an inner surface of base 400 and is provided with a plurality of radially and upwardly extending ribs 436 which terminate in retaining fingers and engage suitably formed apertures 438 radially disposed in the sealing member 430 adjacent its peripheral edge. Apertures 438 permit water communication therethrough.

19

Similarly to the construction of the embodiment of Fig. 1A spike 404 is formed with a central bore 450 which terminates at its lower end in one or more exit apertures 452 which extend to the outside surface of the spike 404 and are arranged for injection of water to a location below the ground surface. Central bore 450 terminates at its upper end in a concave recess 454 defined at the top surface of a centrally disposed protrusion 466 located under sealing member 430 and centered with respect thereto. It may be appreciated that a particular feature of the construction of the emitter of Fig. 5A is that no separate spring is required, since the sealing member acts both as a seal and as a spring.

The operation of the apparatus of Fig. 5A is essentially similar to the operation of the emitter of Fig. 1A described hereinabove. In the absence of pressure in the water supply conduit 428, sealing member 430 is disposed in sealing engagement with an aperture 446 which represents a continuation of central bore 425. When the water supply conduit 428 is pressurized to a predetermined threshold, pressure begins to build up within bore 425. At an intermediate pressure, sealing member 430 becomes partially disengaged from the central portion of the bottom surface of end member 424 and is forced by the pressure within bore 425 to engage concave recess 454 in sealing engagement thus preventing escape of water from the volume 462 defined within the emitter. The peripheral edge of end member 424 meanwhile remains sealed against the sealing member.

Further pressurization of the water supply conduit and consequently of bore 425 eventually overcomes the force exerted by sealing member 430 and forces the sealing member 430 out of sealing engagement with the peripheral portion of the end member 424, thus permitting water flow from the water supply conduit 428 via bore 425 into volume 462. This flow continues as long as the water supply conduit 428 remains pressurized by the required amount to overcome the force of sealing member 430 which is normally urged to engage the end member in sealing engagement, i.e. until volume 462 is filled. The pressure independence of the operation of the emitter of Figs. 5A and 5B is identical to that of the embodiment of Figs. 1A and 1B.

It is noted that during the filling of the volume 462, removal of water from this volume is prevented by the sealing engagement of sealing member 430 with concave recess 454. Once the pressurization of water supply conduit 428 is decreased to a predetermined level, however, the sealing member 430 establishes a sealing relationship with the end member 424. The sealing member 430 thus defines a one-way flow valve.

A further reduction of the pressure in the water supply conduit 428 to a second predetermined level, causes sealing member 430 to break sealing engagement with concave recess 454, thereby permitting the outflow of water from volume 462 via bore 450 and exit apertures 452.

As noted hereinabove in connection with the description of Fig. 1A and 1B, the outflow of water from volume 462 is produced by the combined action of the pressurized air within the volume and gravity.

Reference is now made to Figs. 6A and 6B which illustrate an emitter constructed and operative in accordance with a further alternative embodiment of the present invention. The basic construction features and operation of this emitter are essentially the same as those of the emitter illustrated in Figs. 1A and 1B and described hereinabove and shall not be described once again for the sake of conciseness. The particular features of the emitter illustrated in Figs. 6A and 6B are that the water supply conduit 528 communicates with the emitter at the base 500 thereof instead of through a bore formed in a stem forming part of the cap portion as in the above-described embodiments. This construction enables a plurality of interchangeable cap portions 512, of varying sizes to be replaceably provided for engagement with the base 500, thereby to permit easy section and ready variation in the outflow rate of the emitters. It has been explained above, in connection with the embodiment of Figs. 1A and 1B that the interior volume of the emitter determines the outflow for each pressurization cycle. Thus by selecting a suitably sized cap portion, the outflow of each emitter may be individually and precisely and changeably determined.

In the illustrated embodiment of Figs. 6A and 6B, water from the water supply conduit 528 is supplied through a conduit 530 to a volume overlying a seal 542 which corresponds to seal 42 of the embodiment of Fig. 1A. The remainder of the structure is substantially the same as in the embodiment of Fig. 1A.

Reference is additionally made to Figs 7A and 7B which illustrate a technique for securing a water supply conduit onto an emitter or other element and which is employed in the embodiment of Figs. 6A and 6B. It is noted that in the embodiment of Figs. 6A and 6B, in contrast to the embodiments of Figs. 1A and 5A, a bayonet type coupling with the side of the water conduit is not employed in order to reduce resistance to water flow in the conduit and thus to enhance efficiency of pressurization and depressurization of the water supply conduit. In the embodiment illustrated in Figs. 6A, 6B, 7A and 7B a simple aperture is formed in the water supply conduit 528 in communication with conduit 530 defined in base 500. Water supply conduit 528 passes through a channel 532 defined in base 500. Adjacent channel 532 there are provided a pair of parallel bores 534 which engage the sides of the channel 532. A retaining pin 538 having narrowed inwardly facing edges 540 on parallel arms 542 is selectably positioned in bores 534 as illustrated, in pinching relationship with the water supply conduit, for retaining the water supply conduit 528 in a predetermined position with respect to base 500 in a press-fit relationship at the narrowed edges of the retaining pin. Disengagement of the base from the water supply conduit 528 is readily realized by removal of the retaining pin 538.

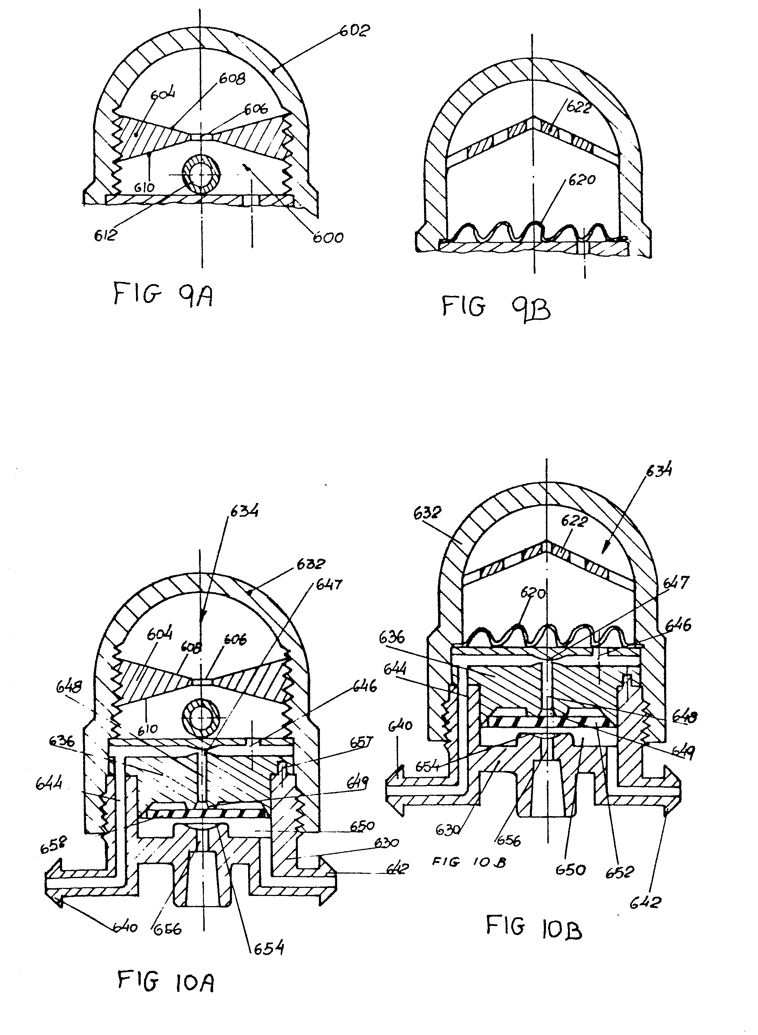

Reference is now made to Fig. 8 which illustrates an emitter constructed and operative in accordance with an additional embodiment of the invention and which provides a bayonet-type connection 550 with a water supply conduit 552, which connection is integrally formed with a base 554. A replaceable, selectably sized cap 556 is provided to selectably determine the capacity of the emitter by fixing the size of volume 562. A seal 564 of the general type employed in the embodiment of Fig. 5A is employed. Here, however, the ribs and apertures of the embodiment of Fig. 5A may be omitted since the seal may be secured at its periphery between the base 554 and an intermediate member 557. Water supply conduit 552 communicates via connection 550 with a conduit 566 formed in base 554, which communicates via an aperture formed in the peripheral edge of seal 564 with a conduit 568 defined in intermediate member 557, which defines a stem end surface 570 against which seal 564 normally rests in sealing engagement therewith and with the outlet of conduit 568.

Base 554 also defines a concave recess 571 centered under surface 570 which communicates with volume 562 via an aperture 572 formed in seal 564 and via a conduit 574 to a recessed water outlet 576 which may be directly open to the atmosphere or alternatively may be selectably connected, as by threading, onto a spike or alternatively onto a hose or other water carrying element.

The operation of the embodiment of Fig. 8 is generally the same as that of the other emitters described hereinabove.

Reference is now made to Figs. 9A and 9B which
illustrate two alternative embodiments of limiting apparatus
for use with water reservoirs constructed and operative
in accordance with an embodiment of the invention. The reservoirs
may be any of the reservoirs which are embodied in any of the
embodiments of emitters described and illustrated herein, such as
the reservoirs of Figs. 6A and 8.

The embodiment of Fig. 9A shows a selectably positionable
ball valve assembly 600 which is threadably mounted in the interior
of a reservoir 602. Assembly 600 comprises a barrier element 604
having a central aperture 606 and conically configured interior
and exterior surfaces 608 and 610 which converge on aperture 606.
A ball 612 of radius greater than the radius of aperture 606 is
arranged to float on water in the reservoir adjacent surface 610.

Ball valve assembly 600 is operative to limit the quantity
of liquid which may be stored in reservoir 602. The amount of liquid
is determined by the volume underlying exterior surface 610 less
the volume of the ball 612, since as the level of the water in this
volume rises, filling the volume, the ball 612 is caused to converge
on the aperture. When this volume is filled, the ball seals aperture
606 and permits no further water to fill the reservoir and no water
to lie adjacent interior surface 608, within a predetermined margin of
error.

The purpose of providing ball valve assembly 600 is to
eliminate the second order dependence of the quantity of water
stored in the reservoir on the line pressure at the reservoir.
This dependency occurs otherwise due to the fact that air is
trapped in the reservoir and fills part of the space therein. The
amount that the air is compressed is a function of the line water
pressure at the reservoir. In order to eliminate this dependency,
assembly 600 limits the amount of water stored in the reservoir
independently of the amount of compression of air, since the
ratio of volumes interior and exterior of barrier element 604
is selected such that under normal operating line pressures, the
volume exterior of barrier element 604 will always be filled during
normal operation notwithstanding pressure losses along the irrigation
line.

It may be appreciated that the use of the apparatus of Fig. 9A has a number of important advantages. By removing the functional dependency of the output on the line pressure, the negative effects of topographical variations on prior art systems are eliminated. Furthermore, relatively high operating line pressures may be employed, thus enabling high frequencies of filling and emptying of the emitters to be provided. This in turn enables a wide range of output rates to be realized without effecting the distribution characteristics of the emitters as a function of output rate.

Referring now to Fig. 9B, there is seen an alternative form of limiting apparatus. Here a diaphragm 620 is provided in association with a diaphragm displacement limiting element 622. The limiting element 622 may be of any suitable shape and is apertured to permit air to pass therethrough. The combination of the diaphragm 620 and the limiting element 622 has precisely the same general function as the limiting ball valve assembly 600 described in Fig. 9A, i.e. to limit the amount of water that can be stored in the reservoir independently of the line pressure of the water. It is appreciated that alternatively other types of limiting apparatus may alternatively be provided.

Reference is now made to Figs. 10A and 10B which illustrate an emitter constructed and operative in accordance with a preferred embodiment of the present invention. The emitters in both illustrations comprise a base 630 and a cover member 632 which defines a reservoir 634. An intermediate member 636 is disposed between the base 630 and the cover member 632 and defines the bottom surface of the reservoir.

Base 630 defines upstream and downstream water communication terminals 640 and 642, which are adapted to be connected in series to a water supply line along with any desired number of identical emitters. The upstream water communication terminal 640 communicates via a conduit 644 with the interior of the reservoir 634 via an aperture 646. Conduit 644 also communicates via a conduit 648 formed in intermediate member 636, with a valve seat 649, hereinafter termed the "second valve seat" which communicates with a sealing member containing chamber 650 in which is disposed a sealing member 652. A valve seat 654, hereinafter termed the "first valve seat" is disposed in communication with chamber 650 and communicates with a water exit conduit 656 to the atmosphere. Conduit 656 may terminate in any form of opening, emitter, nozzle, or sprinkler as desired.

It is noted that conduit 644 passes through base 630 and **0071176** also through intermediate member 636. It is a particular feature of the present invention that conduit 644 is formed to define a venturi 647 communicating with conduit 648 and lowering the pressure therein as the result of fluid flow in conduit 644. This construction enhances the speed of unseating of the sealing member from the first valve seat 654 to enable emptying of the reservoirs of a plurality of emitters at the same time. This, in turn, enables relatively high frequency operation of the emitter line. Alternatively, the venturi may be eliminated.

The downstream water communication terminal 642 communicates with chamber 650. Sealing member 652 is operative, when the water pressure at conduit 648 is greater than that at the downstream water communication terminal 642, to seat in the first valve seat 654 and thus to prevent outflow of water through exit conduit 656 and to permit the flow of water from inlet terminal 640 via chamber 650 to outlet terminal 642. When the water pressure at conduit 648 exceeds that at the downstream terminal 642 by less than the predetermined threshold amount, the sealing member seats at the second valve seat 649, thus permitting water from the downstream terminal to pass through the exit conduit 656 to the atmosphere and preventing water from the downstream terminal from passing to the upstream terminal 640.

It is noted that in this second orientation at which water outlet through the exit conduit 656 is provided, the water stored in reservoir 634 passes back to the upstream terminal 640 and thence to the preceding emitter in the series for draining through its exit conduit. Thus the reservoir 634 of each emitter acts as the reservoir for each preceding emitter, and emits water to the atmosphere therethrough.

The embodiments of Figs. 10A and 10B are identical with respect to what has been described hereinabove. They differ with respect to the limiting means which are incorporated in reservoir 634. In the embodiment of Fig. 10A, the limiting means of Fig. 9A is employed, while in the embodiment of Fig. 10B, the limiting means of Fig. 9B is employed. For conciseness' sake, these elements will not be described again and are indicated by the same reference numerals.

It is a particular feature of the embodiments of Figs. 10A and 10B that a pin 657 is provided as part of base 630 such that when the base and intermediate member 636 are connected as shown, the pin enters a corresponding recess formed in the intermediate member, thus ensuring the correct relative orientation for continuity of conduit 644. If it is desired to block conduit 644, pin 657 may be placed in an adjacent socket and then the two parts of conduit 644 are decoupled, blocking the flow of water therethrough and preventing a water

ate
output from the emitter preceeding that in which the conduit 644 is blocked and downstream therefrom. An easily selectable shut-off feature is thus provided.

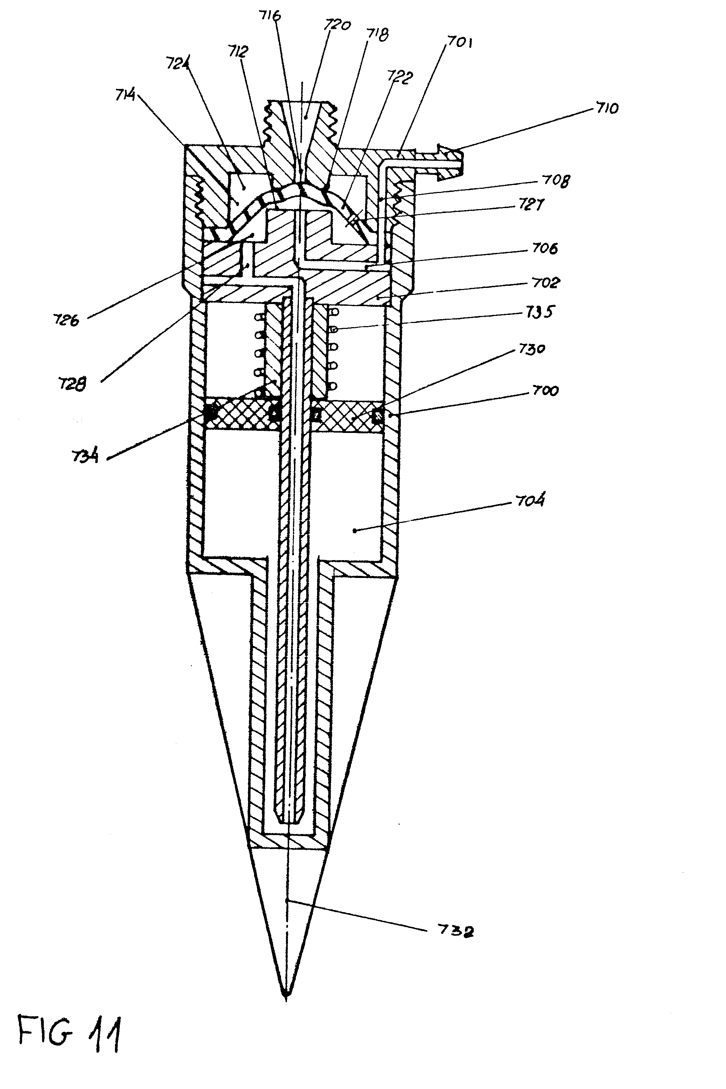

Reference is now made to Fig. 11 which illustrates an emitter constructed and operative in accordance with an alternative embodiment of the invention and comprising a spike base 700, a cap 701 and an internal member 702. The spike base defines an interior volume 704 having a large cross section at the top thereof and a smaller cross section at the bottom thereof and defining a reservoir.

Internal member 702 defines a water inlet conduit 706 which communicates via a conduit 708 defined in cap 701 with an input connector 710 which is adapted for connection to a water supply line (not shown). Conduit 706 terminates at a valve seat 712 in a sealing member chamber 714. Also communicating with sealing member chamber 714 is a water exit conduit 716 which extends from a valve seat 718 at chamber 714 to an output nozzle 720, which may have a threaded exterior surface for attachment to any desired output directing apparatus.

A sealing member 722 is peripherally sealingly engaged between internal member 702 and cap 701 and is operative to selectably seat at either of valve seats 712 and 718, similarly to the operation of the embodiment of Fig. 8, hereinabove. It may be noted that sealing member 722 divides chamber 714 into an upper volume 724 and a lower volume 726 which communicate via an aperture 727 found in sealing member 722.

A conduit 728 communicates between volume 726 and the bottom of reservoir volume 704. A piston 730 is disposed in volume 704 and is adapted to move axially with respect to the reservoir along an axis 732 in response to differential pressures thereon. A stop collar 734 is operative to limit the upper movement of the piston.

The operation of the apparatus of Fig. 11 will now be described briefly. When water is supplied under pressure at connector 710, this water causes the sealing member 722 firstly to slightly dislodge from valve seat 712 and sealingly engage with valve seat 718 and secondly, to permit water flow from conduit 706 to conduit 728, thus filling the reservoir and raising the piston 730 until it reaches its stop position as defined by collar 734.

Depressurization of the water at connector 710 causes the
sealing member 722 to disengage valve seat 718 and engage valve seat
712. The trapped air behind piston 730 or the restoring force produced by an
optional spring 735 which may be provided in association with piston
730 causes piston 730 to move axially downwardly, thus forcing water
back up through conduit 728 and through an aperture 727 formed in
sealing member 722 into volume 724 and out through conduit 716 and
nozzle 720. It is appreciated that where an optional spring is
employed, the volume behind the piston 730 may be eliminated to a
great extent and vented to the atmosphere. A similar construction
may be employed in the embodiments of Figs. 9B and 10B, if a spring
is associated with the diaphragm, thus enabling an air reservoir
volume to be eliminated.

It may be appreciated that the embodiments of the invention
employing diaphragms and pistons, such as the embodiments of Figs. 9B,
10B and 11 have the advantage that their operation is not dependent on
the orientation of the emitter. Thus these embodiments may operate in any
orientation and their operation is not a function of their orientation.

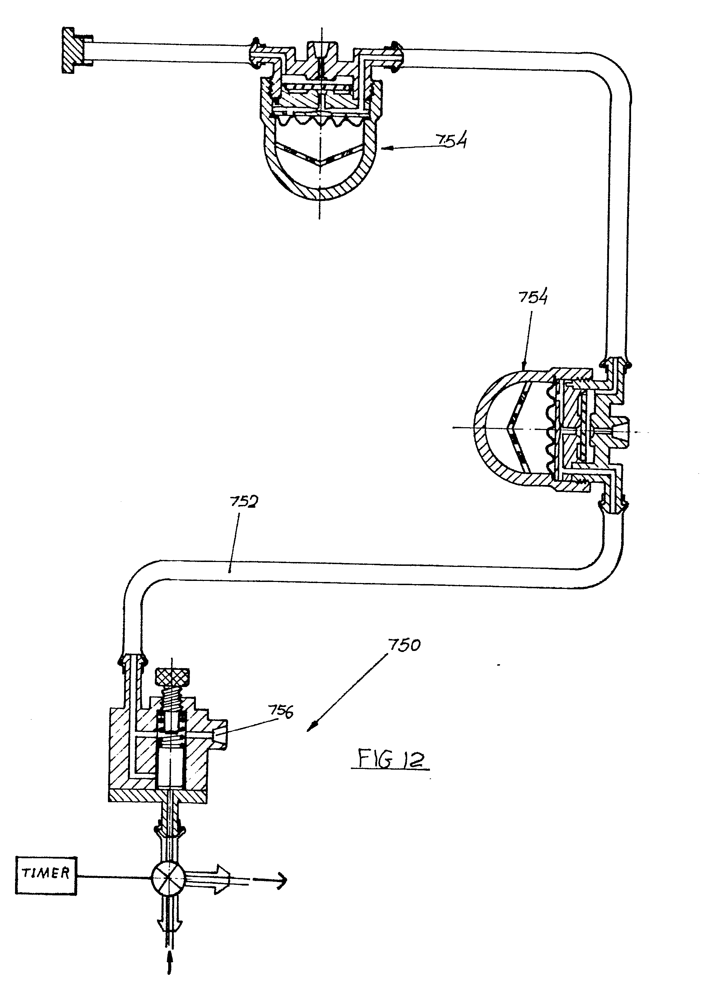

Reference is now made to Fig. 12 which illustrates an
irrigation system constructed and operative in accordance with an
alternative embodiment of the present invention. The irrigation system
comprises a periodic timing valve of conventional construction, 750,
such as the valve illustrated hereinabove in Fig. 2 or any conventional
on-off valve which is operated as by a timer controlled actuator, such
as an electromagnet. The output of valve 750 is a periodic pressurized
flow of water which is supplied through a water supply line 752 to a
plurality or multiplicity of series connected emitters 754 which may be
identical to the emitters shown in Figs. 10A and 10B. The operation of
the individual emitters is exactly as described in connection with
Figs. 10A and 10B, it being noted that the reservoir of each emitter
serves to supply water to the preceding emitter in the series, the
reservoir of the first emitter providing water to an exit outlet 756
of the periodic timing valve 750.

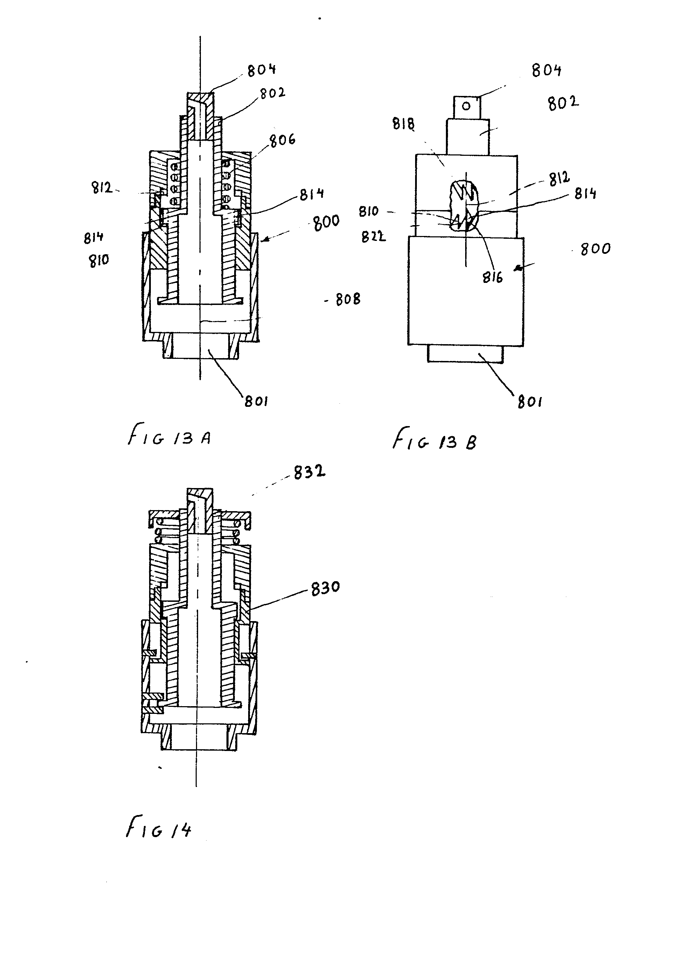

Reference is now made to Figs. 13A and 13B which are respective sectional and partially cut away views of a sprinkler constructed and operative in accordance with an embodiment of the present invention. The particular feature of the present sprinkler is that rotational motion thereof is produced by intermittent supply of water thereto, and/or variations in the pressure of the water supply.

The sprinkler of Figs. 13A and 13B comprises a housing 800 which may be conveniently threadably mounted onto the water exit outlet of any of the emitters described above, such as, for example, the emitter of Fig. 11. Any other suitable type of mounting is also possible. A water inlet 801 is defined within the housing.

Slidably mounted within housing 800 is a stem element 802 onto which is provided a nozzle 804 or any desired type of outlet opening. Stem element 802 is formed with a central bore which receives an intermittent supply of water from the emitter or any other source of a varying or intermittent supply of water and communicates with the interior of the nozzle 804. A spring 806 is seated between the housing 800 and the stem 802 to urge the stem axially downwardly along a longitudinal axis 808.

Disposed on housing 800 are a pair of facing spaced annular toothed surfaces 810 and 812, some of which are seen in side view illustration in Fig. 13B. These annular toothed surfaces are arranged in mutually out of phase relationship and may have their teeth oriented in an opposite facing sense, as seen clearly in Fig. 13B. One or more engaging teeth 814 are fixedly mounted onto the side surface of stem element 802 for engagement selectably with toothed surfaces 810 and 812, whereby rotation of the stem element 802 relative to the housing 800 is provided.

The operation of the sprinkler of Figs. 13A and 13B will now be described in detail:

During operation of the sprinkler an intermittent supply of water and/or a supply of water of varying pressure is supplied at inlet 801. The high pressure of the water supply operates to raise the stem against the urging of spring 806, causing teeth 814 to disengage from toothed surface 810 and to engage toothed surface 812. Due to the inclined surfaces formed on teeth 814 and on the teeth of toothed surface 812, teeth 814 shift rotatably relative to toothed surface 812 such that respective vertical surfaces 816 of teeth 814 approach corresponding surfaces 818 of the teeth of surface 812.

When the supply of water terminates, and/or alternatively when the pressure of the water supply is decreased, the spring 806 returns the stem element 802 to its lowered orientation causing the tooth 814 to disengage from toothed surface 812 and to engage toothed surface 810. Since the teeth of the two surfaces are out of phase, tooth 814 and thus stem element 812 undergoes a further rotational shift in the same direction as its previous shift, the direction being indicated by a reference numeral 820, as vertical surface 816 of tooth 814 approaches the corresponding vertical surface 822 of the corresponding tooth of surface 810. This rotational movement continues two steps at a time with each up down cycle of the stem, producing a rotational shift in the direction of the nozzle 804 which continues in the same direction through 360° and beyond.

Reference is now made to Fig. 14 which illustrates an alternative embodiment of the sprinkler of Figs. 13A and 13B. In this embodiment the housing 830 moves axially up and down in response to changes in the water pressure and sequentially moves the stem 832 in stepwise rotational movement.

It is appreciated that it is possible to provide a selectable azimuth coverage or a changeable direction of rotation by suitable selectable arrangement of the phase relationship or other orientation of the toothed surfaces.

It will be appreciated by persons skilled in the art that the present invention is not limited by what has been particularly shown and described hereinabove. Rather the scope of the present invention is defined only by the claims which follow:

CLAIMS                                    0071176

1.      An irrigation emitting unit suitable for parallel
engagement with a water supply line and comprising:
        a water reservoir arranged to receive an intermittent
supply of water from a water supply line; and
        valve means operative to govern the water output from
said reservoir in response to the pressure of the water source for
providing an intermittent outflow from said water reservoir, said
valve means comprising:
        a water inlet;
        first and second valve seats;
        said first valve seat communicating with a water outlet
from said reservoir;
        said second valve seat communicating with a water inlet
to said reservoir from said water supply line; and
        a sealing member arranged for selectable engagement with
said first and second valve seats.

2.      Irrigation apparatus comprising:
        apparatus for providing an intermittent supply of water;
        a water supply line receiving said intermittent supply of
water; and
        a plurality of emitting units connected in parallel with said
water supply line along the extent thereof, each of said emitting units
comprising a water reservoir and valve means operative to govern the
water output from said reservoir.

3.      Apparatus according to either of the preceding claims and
wherein said valve means is operative when the pressure in said water
supply line exceeds a predetermined first threshold to prevent water
outflow from said reservoir.

4.      Apparatus according to any of the preceding claims and wherein
said valve means is operative to prevent outflow from said reservoir
while inflow to said reservoir from said water supply line takes place.

5.      Apparatus according to any of the preceding claims and wherein said valve means is operative when the pressure in said water supply line exceeds a predetermined second threshold, higher than said first threshold, to permit water flow from said water supply line to said reservoir.

6.      Apparatus according to any of the preceding claims and wherein said valve means is operative to provide a generally uniform output independent of variations in the operating pressure of said water supply line.

7.      Apparatus according to any of the preceding claims and wherein said water supply line may be maintained at a selectable pressure in excess of 5 Atm. without requiring adjustment of said valve means.

8.      Apparatus according to any of the preceding claims and wherein said water supply line has a length in excess of 200 meters and wherein said emitter is operative to provide a generally uniform output flow irrespective of its location along said water supply line.

9.      Apparatus according to any of the preceding claims and wherein said water supply line has a length of approximately 1000 meters.

10.     Apparatus according to any of the preceding claims and wherein said valve means comprises a coil spring which normally urges said sealing member out of engagement with said first valve seat and in sealing engagement with said second valve seat.

11.     Apparatus according to any of the preceding claims and wherein said sealing member is operative under increasing pressure at said water supply line to first sealingly seat in said first valve seat before breaking sealing contact with said second valve seat.

12.     Apparatus according to any of the preceding claims and wherein said valve means also comprises outlet means arranged to provide a flow of water from said reservoir to a location under the ground surface.

13.    Apparatus according to claim 12 and wherein said outlet means includes a spike arranged to be located partially under the ground surfaces and having exit apertures for water located under the ground surface when the spike is normally inserted therein.

14.    Apparatus according to claim 2 and wherein said apparatus for providing an intermittent supply of water is coupled to liquid drainage means for draining liquid from said water supply line, and wherein said drainage means comprises reservoir apparatus for storing said drained water and for returning water stored in said reservoir apparatus to said water supply line.

15.    Apparatus according to any of the preceding claims and wherein said emitting unit comprises a first element including means for coupling to a water supply line and said valve means and a cap unit of selectable size which determines the size of the reservoir and thus the flow capacity of the emitting unit.

16.    Apparatus according to any of the preceding claims and wherein said intermittent supply of water is operative to provide a periodic supply of water.

17.    Apparatus according to any of the preceding claims and wherein said intermittent supply of water is operative to provide an intermittent supply of pressurized water at a rate of between 2 and 50 cycles per minute.

18.    A method of irrigation comprising the steps of:
        providing an intermittent supply of water to an emitter line comprising a plurality of emitters connected in parallel; and
        causing said plurality of emitters to store water during supply of water to said plurality of emitters and afterwards to release it.

19.    A method of irrigation according to claim 18 and wherein said providing step comprises the steps of:

supplying water to said emitter line;

sensing the pressure at a desired location along said emitter line;

terminating the supply of water when the sensed pressure reaches a given high pressure threshold;

sensing the pressure at a desired location along said emitter line;

commencing the supply of water when the sensed pressure reaches a predetermined low pressure threshold.

20.    A method according to claim 19 and also comprising the steps of draining water from the emitter line following said terminating step; and

storing water drained from said emitter line and of returning the stored water during said commencing step.

21.    An irrigation emitter comprising:

a water reservoir arranged to receive an intermittent supply of water from a water supply line;

valve means operative to govern the water output from said reservoir in response to the pressure of the water source for providing an intermittent outflow from said water reservoir; and

limiting means for limiting the maximum amount of water received by said reservoir.

22.    An irrigation emitter according to claim 21 and wherein said limiting means comprise a water quantity responsive valve fixedly or selectably disposed within said reservoir.

23.    An irrigation emitter according to claim 21 and wherein said limiting means comprise a diaphragm having a limited maximum displacement within said reservoir.

24.    Apparatus according to any of claims 21 - 23 and wherein said valve means is operative to meter a predetermined amount of water into said reservoir during each pressurization cycle thereof, independently of variations in the water supply line pressure thereat.

25.    An irrigation emitter suitable for series engagement with a water supply line having an upstream portion connecting said emitter with a source of water supply and a downstream portion connecting said emitter to additional emitters whose water supply first passes through said emitter, said emitter comprising:

a water reservoir arranged to receive an intermittent supply of water from said water supply line; and

valve means operative to govern the water output from said reservoir in response to the pressure of the water source for providing an intermittent outflow from water reservoir downstream thereof;

said valve means comprising first and second valve seats;

a water inlet communicating with the upstream portion of said water supply line;

a first conduit communicating with said reservoir and said water inlet at a first end and with said second valve seat at a second end;

a water exit nozzle communicating with said first valve seat;

a sealing member disposed in a sealing member chamber for selectable engagement with either of said first and second valve seats; and

a downstream water outlet communicating with said downstream portion of said water supply line and with said sealing member chamber.

26.    An irrigation emitter according to claim 25 and wherein said sealing member is operative, when the upstream pressure exceeds the downstream pressure by more than a predetermined threshold, to engage said first valve seat preventing water outflow through said water exit nozzle and to permit water flowthrough from said water inlet to said downstream water outlet; and

when said upstream pressures does not exceed said downstream pressure by more than said predetermined threshold to engage said second valve seat permitting water outflow through said water exit nozzle.

27.     An irrigation emitter according to claim 25 and wherein said water inlet defines a venturi which is effective to lower the pressure at said first conduit in response to water flow through said water inlet.

28.     An irrigation emitter according to claim 27 and wherein said sealing member is operative when the pressure at said first conduit exceeds the downstream pressure by more than a predetermined threshold, to engage said first valve seat preventing water outflow through said water exit nozzle and to permit water flowthrough from said water inlet to said downstream water outlet; and

     when the pressure at said first conduit does not exceed the downstream pressure by more than said predetermined threshold, to engage said second valve seat permitting water outflow through said water exit nozzle.

29.     .. - An irrigation emitter according to claim 25 and also comprising means reducing the pressure at said first conduit below the pressure at said water inlet in response to water flow therethrough.

30.     Apparatus according to any of claims 1 - 17 and also comprising limiting means for limiting the maximum amount of water received by said reservoir.

31.     Apparatus according to claim 30 and wherein said limiting means comprise a water quantity responsive valve fixedly or selectably disposed within said reservoir.

32.     Apparatus according to claim 30 and wherein said limiting means comprise a diaphragm having a limited maximum displacement within said reservoir.

33.     . Apparatus according to claim 25 and also comprising limiting means for limiting the maximum amount of water received by said reservoir.

34.     Apparatus according to claim 33 and wherein said limiting means comprise a water quantity responsive valve fixedly or selectably disposed within said reservoir.

35.     Apparatus according to claim 33 and wherein said limiting means comprise a diaphragm having a limited maximum displacement within said reservoir.

36.     An irrigation emitter according to any of claims 1 - 17 and also comprising spring biased means for removing water from said reservoir.

37.     An irrigation emitter according to any of claims 21 - 29 and also comprising spring biased means for removing water from said reservoir.

38.     An irrigation emitter according to any of claims 1, and 21 - 26 and wherein said reservoir is incorporated as part of a mounting spike associated with said emitter.

39.     Irrigation apparatus according to claim 2 and wherein the periodicity of said intermittent supply of water is a positive function of the pressure at said water supply line.

40.     A sprinkler operative in response to a water supply which varies in quantity and/or pressure and comprising:
        a housing defining a water inlet;
        a stem arranged for axial movement relative to said housing in response to variations in said water supply;
        means for converting axial movement of said stem to stepwise rotational movement thereof; and
        water outlet means associated with said stem for undergoing a desired rotational movement.

41.     A sprinkler operative in response to a water supply which varies in quantity and/or pressure and comprising:
        a housing defining a water inlet;
        a stem including water outlet means rotatably mounted in said housing;
        means for causing said housing to undergo axial movement in response to variations in said water supply; and

means for converting the axial movement of said housing to stepwise rotation of said stem.

42.     Apparatus according to any of the preceding claims 1 - 17 and 21-39 and also comprising a sprinkler coupled to said water outlet.

43.     Apparatus according to claim 42 and wherein said sprinkler is constructed in accordance with either of claims 40 and 41.

44.     Apparatus according to any of the preceding claims and wherein said means for converting comprising first and second toothed surfaces mounted onto said housing in spaced facing orientation and in out of phase relationship and tooth means coupled to said stem for selectable engagement with said first and second toothed surfaces.

45.     Apparatus according to any of claims 40 - 44 and also comprising means for selectably limiting the azimuth of rotation of said sprinkler.

FIG 6A

512
530
528
542
500

FIG 1A

28
26
58
62
46
48
34
60
36
40
44
38
54
16
18
22
25
24
32
30
20
10
12
56 42
14
50
52

FIG 1B

22
25
46
42
32
40
24
34
36
30
44 38 54 50 56
10

FIG 8

556
562
568
557
564
572
570
566
554
550
552 576 574 571

2/8

0071176

FIG 2

FIG 3

FIG 4

FIG 5A

FIG 5B

FIG 6B

FIG 7B

FIG 7A

FIG 9A

FIG 9B

FIG 10A

FIG 10B

FIG 11

754

754

752

750

756

FIG 12

TIMER

FIG 13 A

FIG 13 B

FIG 14